# FASCICULE DE BREVET EUROPEEN

(11) **EP 1 260 458 B1**
(45) Date de publication et mention de la délivrance du brevet: **08.02.2006**
(21) Numéro de dépôt: 01450004.5
(22) Date de dépôt: 20.04.2001
(51) Int. Cl.: B65G 1/02

(54) **Dispositif de voies ferrées de desserte de rayonnages notamment de stockage de produits lourds et son procédé de montage**
Gleisschienengerät für Regalbedienanlage, insbesondere für das Lagern von schweren Gütern und Montageverfahren dafür
Storage and retrieval rail device in particular for storing heavy products and installation method thereof

(43) Date de publication de la demande: 27.11.2002
(73) Titulaire: Fimbault, Serge, 33230 Saint Médard de Guizières (FR)
(72) Inventeur: Fimbault, Serge, 33230 Saint Médard de Guizières (FR)
(74) Mandataire: Thébault, Jean-Louis

(56) Documents cités:
- EP-A- 0 507 979
- CH-A- 543 432
- DE-A- 3 518 933
- DE-A- 3 634 545
- GB-A- 1 207 078
- US-A- 3 552 648

## Description

La présente invention se rapporte aux installations de manutention-stockage à l'aide de transpalettes ou analogues notamment de produits manufacturés lourds, tels que des produits en béton, par exemple des bordures, des blocs, des pavés, etc.... Une telle installation est décrite dans le document CH 543 432 A.

De tels produits sont fabriqués industriellement à cadence élevée à l'aide d'unités de fabrication par moulage automatisé qui délivrent un nombre très important de produits qui doivent subir un séchage qui s'opère dans des systèmes de rayonnage superposés desservis par des appareils robotisés circulant sur des rails. Ces engins sont programmés par des automates pour prendre en charge à l'aide d'un chariot multi-fourches une pluralité de plateaux les uns au dessus des autres et portant chacun un ou plusieurs produits en béton pour les acheminer de l'unité de moulage à des emplacements de stockage pré-déterminés, afin que les produits sèchent, puis les reprendre pour les évacuer.

Ces déplacements s'opèrent sur un système de voies ferrées comprenant une voie principale desservant une pluralité de voies parallèles transversales affectées au rayonnage.

Les rayonnages modernes tendent vers une optimisation de plus en plus poussée conduisant à une augmentation des capacités de stockage occupant le minimum d'espace. Ceci amène à réaliser des rayonnages comprenant un nombre important d'étages de stockage avec le minimum d'espace perdu. Compte tenu des hauteurs importantes atteintes, du poids très lourd des charges déplacées en même temps par le transpalette et des espaces très réduits existant entre parties fixes et parties mobiles, lors de la circulation de transpalette, il est fondamental d'avoir un alignement et un nivellement le plus parfait possible des voies de circulation.

Par exemple, on atteint couramment maintenant des rayonnages d'une hauteur d'une dizaine de mètres au dessus du sol. Dès lors, un dénivelé ou désalignement ne serait-ce que d'un millimètre au niveau des voies entraîne, pour un écartement des voies de 1 mètre, un devers de 10 mm en partie supérieure du chariot multi-fourches. Un tel devers cumulé aux jeux constitue un danger, d'autant plus que les intervalles entre partie fixe et partie mobile peuvent atteindre couramment maintenant des valeurs aussi faibles que 20 mm.

Actuellement, la tolérance en alignement et en nivellement pour les voies est de ± 0,5 mm.

Les méthodes actuellement utilisées pour le montage de l'infrastructure des rayonnages, à savoir les voies ferrées de desserte, principale et latérales, sont des méthodes empiriques et franchement archaïques, bien qu'utilisant des instruments à laser.

En effet, après réalisation d'une chape de béton dont la surface est approximativement plane, les traverses des rails sont mises en place et de niveau par nivellement au laser et à l'aide de simples cales et de pieds de biche. Par approximations successives et après un travail long et fastidieux, on obtient un nivellement acceptable et l'on coule alors une dalle pour "figer" définitivement l'assemblage traverses-cales.

Le résultat n'est pas cependant toujours acceptable. Les traverses en effet peuvent ne pas être d'une parfaite rectitude, en particulier du fait de déformations possibles lors du soudage préalable en atelier d'oreilles sur les traverses destinées à la fixation des pieds des poteaux de rayonnage.

Or, le nivellement par cales permet un relèvement local d'une traverse, mais pas son abaissement.

Par ailleurs, un calage est souvent un échafaudage plus ou moins stable et qui peut être renversé, ce qui oblige à reprendre le nivellement.

Pour rattraper les déformations des traverses et les stabiliser, on procède alors au montage des rayonnages afin de charger les traverses. Ainsi stabilisé, l'ensemble est achevé d'être nivelé convenablement.

Ce n'est qu'après, que l'on pourra souder les rails sur les traverses, puis, enfin, réaliser la chape finale noyant les traverses.

Ainsi, lorsqu'on est obligé de rattraper des déformations de traverses et de stabiliser ces dernières pour obtenir un nivellement optimal, on ajoute aux difficultés du calage et du nivellement, celles de la mise en place des rails dans une forêt de poteaux, puis, du bétonnage qui est tout particulièrement pénible puisqu'il faut déplacer entre les poteaux un tuyau à béton qui, chargé, pèse environ 25 kg au mètre linéaire.

La présente invention a précisément pour but de pallier les divers inconvénients de la méthode traditionnelle de réalisation desdites voies ferrées de desserte d'installation de stockage dynamique utilisant des transpalettes ou analogues.

A cet effet, l'invention a pour objet un dispositif de voies ferrées de desserte de rayonnages, notamment de stockage de produits lourds, comprenant au moins une voie principale desservant une pluralité de voies de stockage disposées orthogonalement à la voie principale, chaque voie étant constituée de rails soudés sur des traverses métalliques ancrées dans le sol, caractérisé en ce qu'il comprend :
- des patins d'ancrage fixés sur une chape de béton grossièrement nivelée et munis chacun de deux tiges filetées faisant saillie verticalement ,
- d'une surface horizontale dite de référence associée à chaque tige et réglable en position le long de cette dernière,
- de plaques planes dites de repos, rapportées et fixées de place en place le long de chaque traverse, en faisant saillie de part et d'autre de la traverse, les parties en saillie étant percées d'un trou, chaque plaque étant susceptible de s'engager sur une paire de tiges d'un patin pour venir en contact avec lesdites surfaces de référence, et
- des moyens de blocage en position desdites plaques de repos.

Avantageusement, tout l'espace entre ladite chape initiale et le plan contenant lesdites surfaces de référence est noyé dans une chape de béton.

Suivant un mode de réalisation préférentiel, lesdites plaques de repos sont soudées sur la face supérieure des fers en double T constituant lesdites traverses et sur certaines au moins desdites plaques de repos sont soudées des oreilles supports de poteau.

Avantageusement, les trous des plaques de repos sont oblongs afin de permettre une éventuelle compensation de défaut de planéité de ladite chape initiale.

Les surfaces dites de référence sont par exemple définies à l'aide de rondelles enfilées sur les tiges des patins d'ancrage et reposant sur des écrous vissés sur les tiges.

L'invention a également pour objet un procédé de montage du dispositif ci-dessus, dans lequel on réalise tout d'abord une chape initiale grossièrement aplanie, on met en place sur la chape et on nivelle par laser les traverses, puis on coule une chape finale noyant lesdites traverses, caractérisé en ce qu'on effectue successivement la fixation sur la chape initiale des patins d'ancrage, le positionnement le long des tiges desdits patins des surfaces de référence et leur nivellement à l'aide dudit laser, la mise en place contre les surfaces de référence desdites plaques de repos préalablement soudées aux traverses, le blocage en position des plaques de repos, puis le coulage de ladite chape finale, les rails étant soudés aux traverses avant coulage de ladite chape finale.

Le procédé selon l'invention permet d'obtenir un alignement et un nivellement remarquables et de manière particulièrement pratique, sûre et rapide.

D'autres caractéristiques et avantages ressortiront de la description qui va suivre d'un mode de mise en oeuvre préféré du procédé de l'invention, description donnée à titre d'exemple uniquement et en regard des dessins annexés sur lesquels :
- la figure 1 est une vue schématique partielle en perspective d'un système de rayonnage à manutention par transpalette mobile le long de voies ferrées de desserte,
- la figure 2 représente partiellement les voies ferrées de desserte de la figure 1 avant la coulée de la chape finale,
- la figure 3 est une vue en perspective d'un patin d'ancrage supportant une traverse supportant elle-même deux rails, et
- la figure 4 est une vue en élévation du patin d'ancrage de la figure 3.

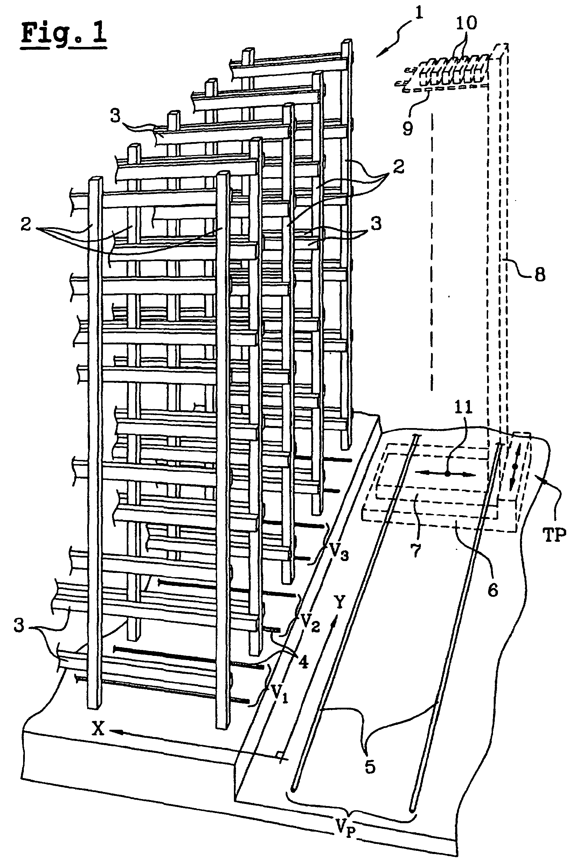

Sur la figure 1, on a représenté en 1 un système de rayonnage conventionnel constitué de poteaux métalliques 2 alignés en X et Y.

Les poteaux 2 sont, dans la direction X, reliés entre eux, sur leurs deux flancs opposés, par des profilés horizontaux 3 en saillie dans les couloirs délimités entre les rangées suivant X des poteaux 2. Les profilés 3 définissent ainsi dans chaque couloir, un certain nombre d'étages de stockage.

Dans chaque alignement en X de poteaux 2, ceux-ci sont également reliés par des contrefiches de renfort non représentées sur la figure 1.

Dans chaque couloir entre poteaux 2 sont disposés sur le sol deux rails parallèles 4 d'une voie de desserte, V1, V2, V3, etc...., orthogonale à une voie dite principale Vp constituée de deux rails horizontaux 5 disposés selon la direction Y et en léger contre-bas par rapport au sol de la zone des rayonnages 1.

Le long de la voie principale se déplace un transpalette ou analogue TP comprenant un premier chariot 6 circulant le long des rails 5 et portant un second chariot 7 reposant sur deux tronçons de rail (non représentés) solidaires du chariot 6, orthogonaux aux rails 5 et de même écartement que celui des rails 4.

Le chariot 7 porte un ensemble multi-fourches 8 susceptible de prendre en charge en superposition des plateaux tels que le plateau 9 portant un certain nombre de produits par exemple en béton 10 provenant d'une unité de moulage et qu'il s'agit de mettre au séchage dans les rayonnages 1.

Le dispositif à transpalette TP est bien connu et n'a pas besoin d'être décrit en détail. Il suffit de savoir que, selon un programme préétabli géré par automate, le transpalette TP se déplace le long de la voie principale Vp depuis la zone-de-chargement (non-représentée) des plateaux garnis (9, 10), jusqu'en regard de la voie de stockage (V1 à V3) pré-déterminée. A ce moment, le chariot 7 mobile suivant la double flèche 11 s'engage avec l'ensemble 8 sur la voie sélectionnée, sur une distance également pré-déterminée, au bout de laquelle il s'arrête et l'ensemble des fourches est abaissé en sorte que les bords latéraux des plateaux 9 viennent reposer sur des profilés 3, chaque plateau étant à un étage différent.

Compte tenu des très faibles distances séparant les parties fixes (2, 3) et les parties mobiles (9, 10) et des hauteurs importantes que peuvent atteindre les rayonnages 1, il est impératif que les rails 4 et 5 soient le plus parfaitement possible alignés et de niveau.

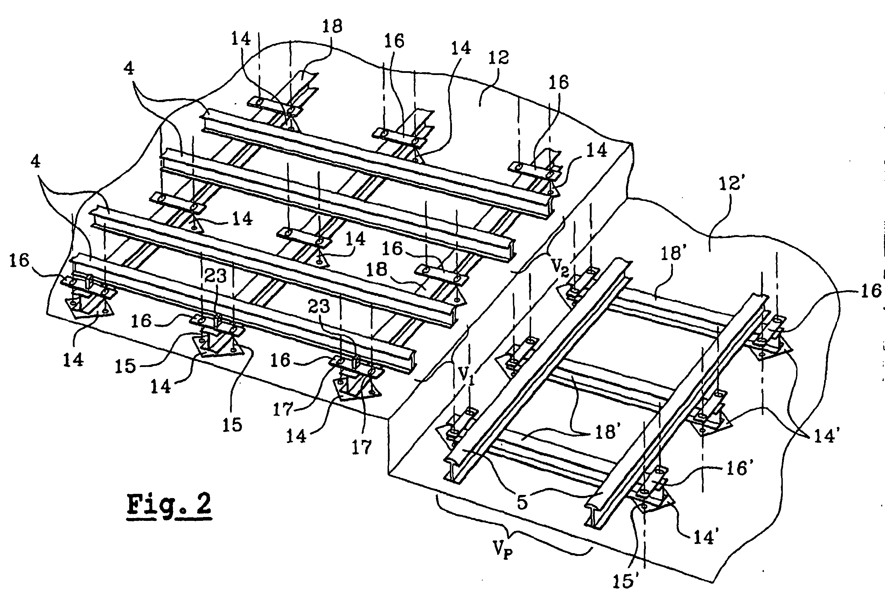

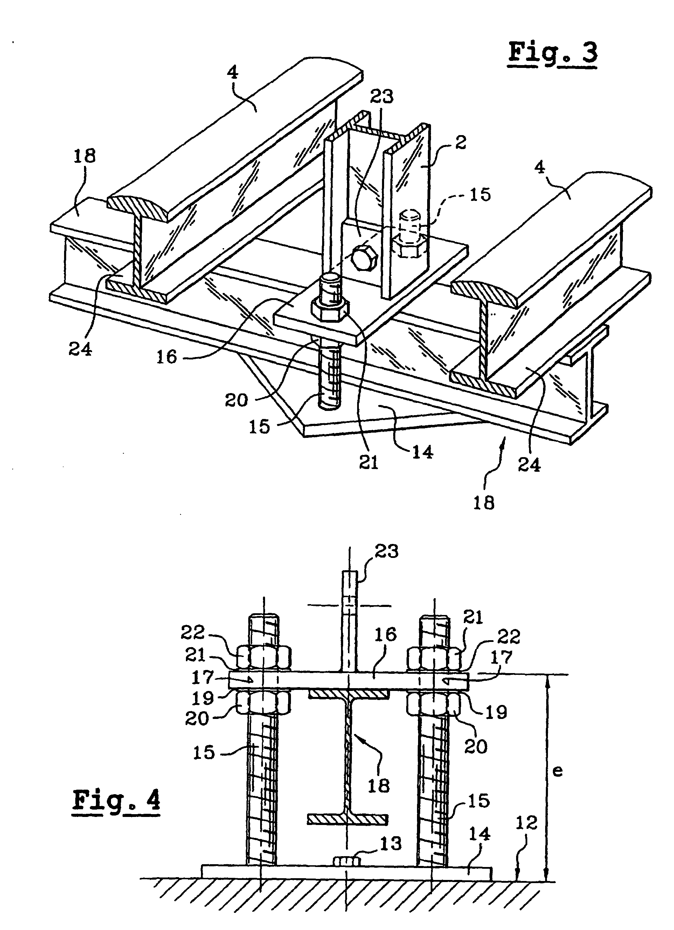

Pour ce faire et conformément à l'invention, on réalise une chape initiale 12 (figures 2 et 4) à la manière habituelle, présentant une planéité grossière sur toute la zone devant être occupée par les rayonnages 1.

Sur la chape 12, le long d'un certain nombre d'alignements orthogonaux aux futurs rails 4, on va fixer au sol à l'aide d'une cheville 13 un certain nombre de patins d'ancrage 14 répartis à intervalles réguliers.

Chaque patin 14 est par exemple constitué d'une plaque métallique carrée chevillée en son centre et munie sur sa face supérieure de deux tiges filetées verticales 15 dont le plan des axes est parallèle aux futurs rails 4.

Sur les paires de tiges 15 de chaque patin 14 sont engagées des plaques métalliques rectangulaires 16, dites plaques de repos, par l'intermédiaire de trous 17 (figure 4) ménagés dans lesdites plaques 16.

De préférence, les trous 17 sont oblongs, le plus grand diamètre étant selon une direction perpendiculaire à l'entraxe desdits trous, à des fins de compensation de défaut de planéité de la surface 12, comme il sera explicité plus loin.

Les plaques 16 d'un même alignement sont reliées par une traverse métallique 18 par exemple à section en double T ou autre section, soudée sous la face inférieure des plaques 16 qui débordent ainsi de part et d'autre de la traverse 18, laquelle s'étend dans les intervalles entre tiges 15, à une certaine distance au dessus des patins 14.

La face inférieure de chaque plaque de repos 16 repose sur deux surfaces de référence définies par les faces supérieures de deux rondelles 19 (figure 4) enfilées sur les deux tiges 15 de chaque patin 14.

Chaque rondelle 19 est réglable en position le long de la tige 15 grâce à un écrou inférieur 20 vissé sur la tige.

La plaque 16 est bloquée en position sur les tiges 15 grâce à un écrou supérieur 21 vissé sur chaque tige 15, avec interposition d'une seconde rondelle 22.

Sur les figures 3 et 4, on a représenté en 23 une oreille métallique soudée sur la face supérieure d'une plaque 16, à la manière connue, pour la fixation du pied d'un poteau 2, par boulonnage.

Sur la face horizontale supérieure du profilé 18 sont soudés, à la manière habituelle, les rails parallèles 4. Sur la figure 3, les deux rails 4 représentés appartiennent à deux voies parallèles (V1 et V2 par exemple) séparées par un alignement de poteaux 2.

Les ensembles formés par une traverse 18 et les plaques 16 et oreilles 23 associées sont soudés en atelier et mis en place sur les alignements appropriés de patins 14 de la manière suivante.

Les écrous inférieurs 20, avec leur rondelle 19, sont pré-positionnés à la main à une distance pré-déterminée, approximative, à partir des patins 14, après fixation de ces derniers.

On effectue alors le nivellement des faces supérieures des rondelles 19 à l'aide d'un laser et de piges conventionnelles (non représentées) engagées sur les extrémités des tiges 15 dépassant lesdites rondelles 19.

Le nivellement est réalisé à la manière bien connue en sorte que toutes les faces supérieures des rondelles 19 des plaques 14 associées à toutes les traverses 18 de la surface à traiter, par exemple celle correspondant aux voies V1, V2, V3, etc...., soient parfaitement de niveau. Le réglage en hauteur des rondelles 19 s'effectue par simple vissage ou dévissage des écrous 20.

Ensuite, une traverse 18, avec ses éléments 16, 23 est mise en place comme illustré par la figure 4, les plaques 16 étant engagées par leurs trous 17 sur les tiges 15.

La même dépose est effectuée autant de fois qu'il y a de traverses 18.

Le blocage en position des plaques 16 peut alors être effectuée en mettant en place les rondelles 22 et les écrous 21 qui sont serrés.

Les rails 4 peuvent alors être soudés sur les traverses 18, avec l'écartement désiré.

La dernière opération est le coulage d'une chape finale de béton dans l'espace e (figure 4) délimité entre la chape initiale 12 et la face supérieure des plaques 16. La surface de cette chape finale affleure ainsi la face supérieure des patins 24 des rails 4, qui ont une épaisseur de l'ordre de celle desdites plaques 16.

Les traverses 18 sont ainsi complètement noyées dans la chape finale, ainsi que les patins 14 et les parties de tiges 15 en dessous des plaques 16. Sur la figure 1, au droit des rayonnages 1, on a représenté la chape finale de laquelle émergent les poteaux 2 et les rails 4 , les extrémités des tiges 15 et les écrous supérieurs 21 n'étant pas représentés par souci de clarté.

Sur la figure 2, on a représenté en 12', la chape initiale relative à la zone de la voie principale Vp, laquelle se situe à un niveau légèrement en dessous de celui de la chape 12 pour les besoins de la circulation du chariot 6 portant les tronçons de rails sur lesquels repose le chariot 7, ces tronçons devant être en alignement avec les voies V1, V2, V3, etc....

Pour la mise en place des rails 5, on procède de la même manière que pour les rails 4. Des patins d'ancrage 14' sont d'abord fixés, puis des écrous inférieurs identiques aux écrous 20 et des rondelles identiques aux rondelles 19 sont mis en place sur les tiges 15' des patins.

Ensuite, des traverses 18' munies au préalable à chaque extrémité d'une plaque de repos 16', sont placées sur les patins 14' après nivellement au laser desdites rondelles.

Les plaques 16' sont alors bloquées en position de la même manière que les plaques 16 et la chape finale peut ensuite être coulée jusqu'à hauteur des patins des rails 5 et des plaques 16', cette chape finale étant représentée sur la figure 1.

Les rails 5 sont, de même que les rails 4, soudés sur les traverses 18' ou 18, de préférence avant coulage de la chape finale.

Contrairement aux plaques 16, les plaques 16' ne comportent pas d'oreilles sur leur face supérieure puisqu'il n'y a pas de poteaux à monter dans la zone de la voie principale Vp.

Il est également à noter que les écrous inférieurs 20 et les rondelles 19 de référence peuvent être mis en place sur les tiges 15 et pré-positionnés avant le scellement des patins 14, 14' au sol.

En variante, les traverses 18, 18' peuvent être soudées sur la face supérieure des plaques de repos 16, 16' et non plus sous la face inférieure comme illustré par les dessins, les oreilles 23 étant alors elles-mêmes soudées sur la face supérieure desdites traverses.

Les traverses 18, 18' sont d'une seule pièce et s'étendent sur toute la longueur ou largeur de la zone à couvrir, ou bien sont en plusieurs tronçons aboutés par éclissage.

Il peut par ailleurs être nécessaire, du fait de défauts de planéité de la chape 12, de rattraper le positionnement des traverses 18 par exemple.

A cet effet, on va procéder à l'alignement au cordeau de l'une des extrémités des traverses 18, en faisant passer un cordeau dans le trou des oreilles 23, cette opération de repositionnement des traverses s'effectuant bien entendu avant le serrage des écrous 21 et étant possible grâce au profil oblong des trous 17.

Il est enfin à noter que l'invention s'applique à toute installation de stockage dynamique ou autre incluant un système de desserte par voies ferrées nécessitant un alignement et un nivellement très précis des diverses voies.

## Revendications

1. Dispositif de voies ferrées de desserte de rayonnages, notamment de stockage de produits lourds, comprenant au moins une voie principale (Vp) desservant une pluralité de voies de stockage (V1, V2, V3, ...) disposées orthogonalement à la voie principale, chaque voie étant constituée de rails (4, 5) soudés sur des traverses métalliques (18, 18') ancrées dans le sol, **caractérisé en ce qu'**il comprend :
- des patins d'ancrage (14, 14') fixés sur une chape de béton grossièrement nivelée (12, 12') et munis chacun de deux tiges filetées (15) faisant saillie verticalement ,
- d'une surface horizontale dite de référence (19) associée à chaque tige (15) et réglable en position le long de cette dernière,
- de plaques planes dites de repos (16, 16'), rapportées et fixées de place en place le long de chaque traverse (18, 18'), en faisant saillie de part et d'autre de la traverse, les parties en saillie étant percées d'un trou (17), chaque plaque étant susceptible de s'engager sur une paire de tiges (15) d'un patin (14, 14') pour venir en contact avec lesdites surfaces de référence (19), et
- des moyens (21) de blocage en position desdites plaques de repos (16, 16').

2. Dispositif suivant la revendication 1, **caractérisé en ce que** lesdites surfaces de référence sont constituées par la face supérieure de rondelles (19) enfilées sur les tiges filetées (15) des patins d'ancrage (14, 14') et reposant sur des écrous (20) vissés sur lesdites tiges (15).

3. Dispositif suivant la revendication 1 ou 2, **caractérisé en ce que** les trous (17) des plaques de repos (16, 16') sont des trous oblongs dont le grand axe est parallèle aux traverses (18, 18') associées.

4. Dispositif suivant l'une des revendications 1 à 3, **caractérisé en ce que** les traverses (18, 18') sont soudées sous les plaques de repos (16, 16').

5. Dispositif suivant la revendication 4, **caractérisé en ce que** des oreilles (23) de fixation des pieds de poteaux (2) sont soudées sur la face supérieure de certaines au moins des plaques de repos (16).

6. Dispositif suivant l'une des revendications 1 à 5, **caractérisé en ce que** lesdits moyens de blocage de plaques de repos (16, 16') sont des écrous (21) vissés sur les tiges filetées (15) des patins d'ancrage (14, 14').

7. Dispositif suivant l'une des revendications 1 à 6, **caractérisé en ce qu'**il comporte en outre une chape de béton finale remplissant l'espace (e) entre la chape initiale (12, 12') et le plan défini par lesdites plaques de repos (16, 16').

8. Procédé de montage du dispositif selon l'une des revendications 1 à 7, comprenant des patins (14, 14') d'ancrage au sol munis de tiges filetées (15), des traverses (18, 18') solidaires de plaques de repos (16, 16') disposées sur des surfaces de référence (19) positionnées le long desdites tiges (15) et des moyens (21) de blocage desdites traverses (18, 18'), procédé dans lequel on réalise tout d'abord une chape initiale grossièrement aplanie (12, 12'), on met en place sur la chape et on nivelle par laser des traverses (18, 18'), puis on coule une chape finale noyant lesdites traverses, **caractérisé en ce qu'**on effectue successivement la fixation sur la chape initiale (12, 12') des patins d'ancrage (14, 14'), le positionnement le long des tiges (15) desdits patins des surfaces de référence (19) et leur nivellement à l'aide dudit laser, la mise en place contre les surfaces de référence (19) desdites plaques de repos (16, 16') préalablement soudées aux traverses (18, 18'), le blocage en position des plaques de repos (16, 16'), puis le coulage de ladite chape finale.

9. Procédé suivant la revendication 8, **caractérisé en ce qu'**avant le blocage en position desdites plaques de repos (16, 16') on ajuste le positionnement des traverses (18, 18') par une mise au cordeau de l'une de leurs extrémités.

10. Procédé suivant la revendication 8 ou 9, **caractérisé en ce que** les rails (4, 5) sont soudés aux traverses (18, 18') avant coulée de ladite chape finale.

## Patentansprüche

1. Schienenvorrichtung für die Bedienung von Regalen, insbesondere für die Lagerung schwerer Produkte, mit wenigstens einem Hauptweg (Vp), der mehrere Lagerungswege (V1, V2, V3, ...) bedient, die senkrecht zum Hauptweg angeordnet sind, wobei jeder Weg aus Schienen (4, 5) gebildet ist, die auf metallischen Querstreben (18, 18') verschweißt sind, die im Boden verankert sind, **dadurch gekennzeichnet, dass** sie umfasst:
- Verankerungsfüße (14, 14'), die auf einer grob nivellierten Betonausgleichsschicht (12, 12') befestigt sind und jeweils mit zwei Gewindestiften (15) versehen sind, die vertikal vorstehen,
- eine horizontale sogenannte Bezugsoberfläche (19), die jedem Stift (15) zugeordnet ist und deren Position längs dieses Stifts einstellbar ist,
- ebene sogenannte Auflageplatten (16, 16'), die stellenweise längs jeder Querstrebe (18, 18') angefügt und befestigt sind und beiderseits der Querstrebe vorstehen, wobei durch die vorstehenden Abschnitte ein Loch (17) verläuft und wobei jede Platte mit einem Paar Stifte (15) eines Fußes (14, 14') in Eingriff gelangen kann, um mit den Bezugsoberflächen (19) in Kontakt zu gelangen, und
- Mittel (21), die die Auflageplatten (16, 16') in ihrer Position blockieren.

2. Vorrichtung nach Anspruch 1, **dadurch gekennzeichnet, dass** die Bezugsoberflächen durch die obere Fläche von Unteriegscheiben (19) gebildet sind, die auf die Gewindestifte (15) der Verankerungsfüße (14, 14') aufgesteckt sind und auf Muttern (20) ruhen, die auf die Stifte (15) geschraubt sind.

3. Vorrichtung nach Anspruch 1 oder 2, **dadurch gekennzeichnet, dass** die Löcher (17) der Auflageplatten (16, 16') Langlöcher sind, deren große Achse zu den zugeordneten Querstreben (18, 18') parallel ist.

4. Vorrichtung nach einem der Ansprüche 1 bis 3, **dadurch gekennzeichnet, dass** die Querstreben (18, 18') unter die Auflageplatten (16, 16') geschweißt sind.

5. Vorrichtung nach Anspruch 4, **dadurch gekennzeichnet, dass** auf die obere Fläche wenigstens bestimmter Auflageplatten (16) Befestigungslappen (23) für Füße von Stützen (2) geschweißt sind.

6. Vorrichtung nach den Ansprüchen 1 bis 5, **dadurch gekennzeichnet, dass** die Blockiermittel der Auflageplatten (16, 16') Muttern (21) sind, die auf die Gewindestifte (15) der Verankerungsfüße (14, 14') geschraubt sind.

7. Vorrichtung nach einem der Ansprüche 1 bis 6, **dadurch gekennzeichnet, dass** sie außerdem eine letzte Betonausgleichsschicht aufweist, die den Raum (e) zwischen der anfänglichen Ausgleichsschicht (12, 12') und der durch die Auflageplatten (16, 16') definierten Ebene füllt.

8. Verfahren zum Montieren der Vorrichtung nach einem der Ansprüche 1 bis 7, die mit Gewindestiften (15) versehene Füße (14, 14') für die Verankerung auf dem Boden, Querstreben (18, 18'), die mit Auflageplatten (16, 16') fest verbunden sind, die auf Bezugsoberflächen (19) angeordnet sind, die längs der Stifte (15) positioniert sind, und Mittel (21) zum Blockieren der Querstreben (18, 18') umfasst, wobei in dem Verfahren zunächst eine grob eingeebnete Anfangsausgleichsschicht (12, 12') verwirklicht wird, auf der Ausgleichsschicht Querstreben (18, 18') angeordnet und mittels Laser nivelliert werden, und anschließend eine letzte Ausgleichsschicht gegossen wird, die die Querträger versenkt, **dadurch gekennzeichnet, dass** nacheinander die Befestigung der Verankerungsfüße (14, 14') auf der anfänglichen Ausgleichsschicht (12, 12'), die Positionierung der Füße auf den Bezugsoberflächen (19) längs der Stifte (15) und ihre Nivellierung mit Hilfe des Lasers, die Anordnung der vorher mit den Querstreben (18, 18') verschweißten Auflageplatten (16, 16') an den Bezugsoberflächen (19), die Blockierung der Auflageplatten (16, 16') in ihrer Position und dann das Gießen der letzten Ausgleichsschicht ausgeführt werden.

9. Verfahren nach Anspruch 8, **dadurch gekennzeichnet, dass** vor dem Blockieren der Auflageplatten (16, 16') in ihrer Position die Positionierung der Querstreben (18, 18') durch eine Schnurausrichtung eines ihrer Enden eingestellt wird.

10. Verfahren nach Anspruch 8 oder 9, **dadurch gekennzeichnet, dass** die Schienen (4, 5) mit den Querstreben (18, 18') verschweißt werden, bevor die letzte Ausgleichsschicht gegossen wird.

## Claims

1. A railway device serving racking, in particular for the storage of heavy products, comprising at least one main track (Vp) serving a plurality of storage tracks (V1, V2, V3 ...) disposed orthogonally to the main track, each track comprising rails (4, 5) welded to metal sleepers (18, 18') anchored in the ground, **characterised in that** it comprises:
- anchoring shoes (14, 14') fixed to a roughly levelled concrete screed (12, 12') and each provided with two threaded rods (15) projecting vertically,
- a horizontal so-called reference surface (19) associated with each rod (15) and adjustable for positioning along the latter,
- planar so-called resting plates (16, 16'), attached and fixed in place along each sleeper (18, 18'), projecting on each side of the sleeper, the projecting parts having a hole (17) in them, each plate being able to engage on a pair of rods (14) of a shoe (14, 14') in order to come into contact with said reference surface (19), and
- means (21) for locking said resting plates (16, 16') in position.

2. A device according to claim 1, **characterised in that** said reference surfaces are formed by the top surface of washers (19) on the threaded rod (15) of the anchoring shoes (14, 14') and resting on nuts (20) screwed on said rods (15).

3. A device according to claim 1 or 2, **characterised in that** the holes (17) in the resting plates (16, 16') are oblong holes, the major axis of which is parallel to the associated sleepers (18, 18').

4. A device according to one of claims 1 to 3, **characterised in that** the sleepers (18, 18') are welded below the resting plates (16, 16').

5. A device according to claim 4, **characterised in that** lugs (23) fixing the post feet (2) are welded to the top face of at least some of the resting plates (16).

6. A device according to one of claims 1 to 5, **characterised in that** said means for locking resting plates (16, 16') are nuts (21) screwed onto the threaded rods (15) of the anchoring shoes (14, 14').

7. A device according to one of claims 1 to 6, **characterised in that** it also comprises a final concrete screed filling the space (e) between the initial screed (12, 12') and the plane defined by said resting plates (16, 16').

8. A method of mounting the device according to one of claims 1 to 7, comprising ground anchoring shoes (14, 14') provided with threaded rods (15), sleepers (18, 18') fixed to resting plates (16, 16') disposed on reference surfaces (19) positioned along said rods (15) and means (21) for locking said sleepers (18, 18'), a method in which first of all a roughly levelled-off initial screed (12, 12') is produced, sleepers (18, 18') are placed on the screed and levelled by laser, then a final screed embedding said sleepers is poured, **characterised in that** there are effected successively the fixing of the anchoring shoes (14, 14') to the initial screed (12, 12'), the positioning of the reference surfaces along the rods (15) of said shoes (19) and their levelling by means of said laser, the placing against the reference surfaces (19) of said resting plates (16, 16') previously welded to the sleepers (18, 18'), the locking in position of the resting plates (16, 16'), and then the pouring of said final screed.

9. A method according to claim 8, **characterised in that**, before the locking in position of said resting plates (16, 16'), the positioning of the sleepers (18, 18') is adjusted by means of a line at one of their ends.

10. A method according to claim 8 or 9, **characterised in that** the rails (4, 5) are welded to the sleepers (18, 18') before said final screed is poured.
